# EUROPÄISCHE PATENTSCHRIFT

(11) **EP 2 830 436 B1**
(45) Veröffentlichungstag und Bekanntmachung des Hinweises auf die Patenterteilung: **24.08.2016**
(21) Anmeldenummer: 13711885.7
(22) Anmeldetag: 22.03.2013
(51) Int. Cl.: C08B 30/02, C08B 30/04, A23L 7/10, A23L 19/10

(54) **VERFAHREN ZUR GEWINNUNG VON STÄRKE AUS STÄRKEHALTIGEN PFLANZEN, INSBESONDERE AUS KARTOFFELKNOLLEN ODER CASSAVAWURZELN ODER LEGUMINOSEN**
METHOD FOR RECOVERING STARCH FROM STARCHY PLANTS, PARTICULARLY FROM POTATO TUBERS OR CASSAVA ROOTS OR LEGUMES
PROCÉDÉ POUR OBTENIR DE L'AMIDON À PARTIR DE PLANTES CONTENANT DE L'AMIDON, EN PARTICULIER À PARTIR DE TUBERCULES DE POMME DE TERRE OU DE RACINES DE MANIOC OU DE LÉGUMINEUSES

(30) Priorität: 26.03.2012 DE 102012102588; 06.07.2012 DE 102012106074
(43) Veröffentlichungstag der Anmeldung: 04.02.2015
(73) Patentinhaber: GEA Mechanical Equipment GmbH, 59302 Oelde (DE)
(72) Erfinder: GOLDAU, Hans-Peter, 59329 Wadersloh (DE); TIMMER, Wim, NL-9641 MN Veendam (NL)
(74) Vertreter: Specht, Peter
(86) Internationale Anmeldenummer: PCT/EP2013/056016
(87) Internationale Veröffentlichungsnummer: WO 2013/143986

(56) Entgegenhaltungen:
- US-A- 4 416 701
- F. MEUSER ET AL: "Einsatz der Hochdruckhomogenisierung zur Auflösung der Zellstruktur von Stärkekartoffeln", STARCH - STÄRKE, Bd. 36, Nr. 3, 1. Januar 1984 (1984-01-01) , Seiten 73-77, XP55080046, ISSN: 0038-9056, DOI: 10.1002/star.19840360302
- JUSCELINO TOVAR ET AL: "Analytical and nutritional implications of limited enzymic availability of starch in cooked red kidney beans", JOURNAL OF AGRICULTURAL AND FOOD CHEMISTRY, Bd. 38, Nr. 2, 1. Februar 1990 (1990-02-01), Seiten 488-493, XP055080118, ISSN: 0021-8561, DOI: 10.1021/jf00092a034
- MEUSER F ET AL: "YIELD OF STARCH AND BY-PRODUCTS IN THE PROCESSING OF DIFFERENT VARIETIES OF WRINKLED PEAS ON A PILOT SCALE", CEREAL CHEMISTRY, AACC INTERNATIONAL INC, US, Bd. 74, Nr. 4, 1. Januar 1997 (1997-01-01) , Seiten 364-370, XP001149013, ISSN: 0009-0352

## Beschreibung

Die Erfindung betrifft ein Verfahren zur Gewinnung von Stärke aus stärkehaltigen Pflanzen, insbesondere aus Kartoffelknollen oder Cassavawurzeln oder Leguminosen.

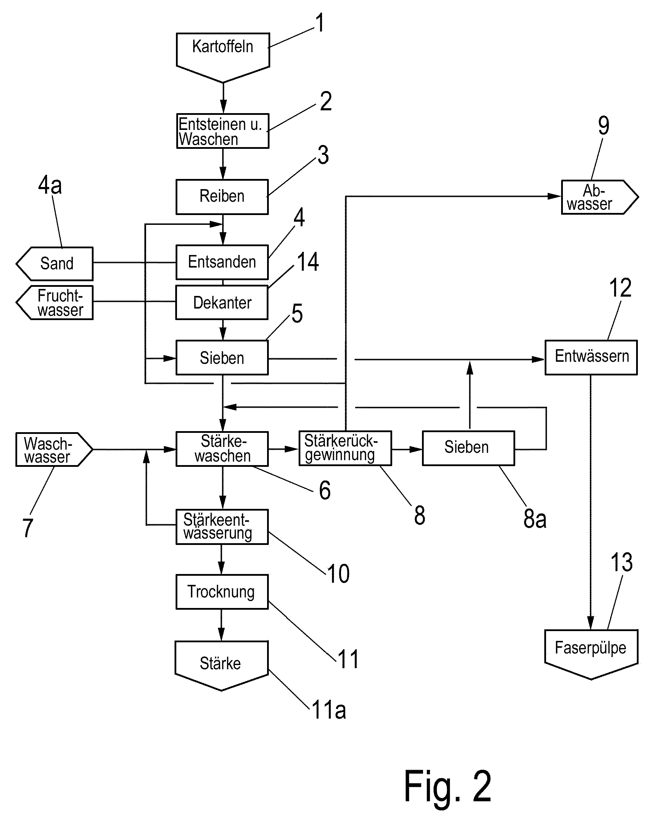

Figur 2 offenbart ein an sich bekanntes Verfahren zur Gewinnung von Stärke, hier aus Kartoffeln. Analog ist es bei der Cassavawurzel anzuwenden. Die Pflanze "Cassava" ist auch unter dem Namen "Maniok" bekannt. Die Stärkeausbeute dieses Verfahrens liegt bei 95-97 Gew. % bezogen auf die Gesamtmenge an Stärke in einer Kartoffelknolle. Der Restanteil an Stärke bleibt an die Pflanzenbestandteile der Kartoffelknollen bzw. der Cassavawurzeln gebunden und ist bislang nicht nutzbar.

Es ist auch bekannt, zum Zellaufschluss die Zellen vor einem Zerkleinern z.B. durch Reiben in einer geeigneten Einrichtung zur Hochdruckerzeugung unter einen solchen Hochdruck zu setzen, dass ein Aufschluss eines wesentlichen Teils der Zellen bewirkt wird (insbesondere von mehr als 50% der Zellen). Ein solches Vorgehen bzw. ein solchen "hunter Hochdruck setzen" wird nachfolgend im Rahmen dieser Anmeldung auch als "Hochdruck-Zellaufschließen" bezeichnet. Bisher ist mit einem solchen Hochdruck-Zellaufschließen vor dem Reiben allerdings keine wesentliche Erhöhung der Stärkeausbeute zu erzielen. Zum Stand der Technik sei insofern auf folgenden Artikel verwiesen: F. Meuser et al: "Einsatz der Hochdruckhomogenisierung zur Auflösung der Zellstruktur von Stärkekartoffeln", STARCH - STÄRKE, Bd. 36, Nr. 3, 1. Januar 1984 (1984-01-01), Seiten 73-77, XP55080046, ISBN: 0038-9056, DOI: 10.1002/star. 19840360302.

Es ist daher die Aufgabe der vorliegenden Erfindung, ein Verfahren bereitzustellen, welches eine Verbesserung der Stärkeausbeute bewirkt, insbesondere auch die Gewinnung von Stärke aus Pflanzenbestandteilen, welche nur noch über einen geringen Stärkegehalt verfügen.

Die Erfindung löst diese Aufgabe durch die Merkmale des Anspruchs 1.

Das erfindungsgemäße Verfahren zur Gewinnung von Stärke aus stärkehaltigen Pflanzen, insbesondere aus Kartoffelknollen oder Cassavawurzeln oder Leguminosen, weist nach dem Gegenstand des Anspruchs 1 folgende aufeinander folgende Schritte A) bis D) auf:
A) Aufschließen, insbesondere durch Zerkleinern, der stärkehaltigen Pflanzen unter Freisetzen von Stärke;
B) Trennen der zerkleinerten Pflanzen in eine erste stärkereiche Fraktion (1) und eine relativ dazu stärkearme Faserfraktion (2);
C) Hochdruckbehandeln der der stärkearmen Faserfraktion (2) zum Hochdruck-Zellaufschließens zum Freisetzen weiterer Stärke;
D) Trennen der durch Hochdruck behandelten stärkearmen Faserfraktion in eine zweite stärkereiche Fraktion und eine zweite stärkearme Faserfraktion.

Aufgrund des Zwischenschrittes "C" des Hochdruck-Zellaufschließens der stärkearmen Faserfraktion kann weitere an die Pflanzenbestandteile noch gebundene Stärke gewonnen werden. Dies führt zu einer Verbesserung der Gesamtstärke-Ausbeute des Prozesses. So wurde im Versuch eine um 2-4 Gew% gegenüber dem konventionellen Verfahren mit den Schritten A) und B) erreicht. Im Vergleich zu einem Hochdruckzell-Aufschließen der Pflanzen bzw. Pflanzenteile direkt vor dem ersten Reiben ist es überraschend vorteilhaft, wenn das Hochdruckzell-Aufschließen erst bei der bereits im Vergleich zum Ausgangsmaterial stärkearmen bzw. -ärmeren Faserfraktion (bzw. bei der stärkearmen faserigen Fraktion) durchgeführt wird und wenn diese Fraktion nochmals in eine zweite stärkereiche Fraktion und eine zweite stärkearme Faserfraktion getrennt wird.

Es ist vorteilhaft, wenn das Hochdruck-Zellaufschließen bei einem Druck von mindestens 10bar, insbesondere wenigstens 20 bar, besonders vorzugsweise mindestens 50 bar, erfolgt. Mit zunehmendem Druck bis zu 200 bar verbessert sich in der Regel das Ergebnis jeweils weiter.

Als Einrichtungen zur Erzeugungen von Hochdruck eignen sich besonders gut Homogenisatoren.

Prinzipiell geeignet sind aber auch andere Hochdruckerzeuger wie insbesondere Extruder, mit denen ein genügend hoher Druck zum Hochdruck-Zellaufschluss erzeugt werden kann.

Vorzugsweise erfolgt in einem sich an den Schritt D) anschließenden Schritt E) ein Weiterverarbeiten der ersten oder zweiten stärkereichen Fraktion zu Stärke durch an sich bekannte Maßnahmen.

Das erste Aufschließen durch Zerkleinern der stärkehaltigen Pflanzen kann durch Reiben mit einer Reibe erfolgen. Durch das Reiben werden die Zellen der Pflanze aufgebrochen und die Stärke wird freigesetzt. Die Trennung der zerkleinerten Pflanzen in Schritt A und/oder ersten stärkearmen Faserfraktion in Schritt D kann durch Trennen, insbesondere Sieben, beispielsweise durch feste Siebe oder durch rotierende Siebe, erfolgen.

Die erste stärkereiche Faserfraktion kann aus Stärkemilch oder aus Stärkemilch und feinen Fasern bestehen.

Nach einer Variante des erfindungsgemäßen Verfahrens wird die erste stärkearme Faserfraktion weiter bzw. nochmals aufgeteilt in stärkearme und stärkereiche Fasern. Nur die stärkereichen Fasern werden bei dieser Variante dem Hochdruckaufschluss zur Freisetzung der Stärke unterzogen. Der Vorteil dieser Variante besteht darin, dass der Investitionsaufwand verringert und eine Engergieeinsparung erreicht wird.

Für das Trennen der Fraktionen in Schritt A und/oder in Schritt D empfiehlt sich auch ein mehrfaches bzw. mehrstufiges Trennen, insbesondere ein mehrfaches Sieben. Dadurch kann die benötigte Reinheit, je nach Messgröße des Siebes und Intensität des Trennens, insbesondere Siebens, eingestellt werden.

Die Weiterverarbeitung der ersten und/oder zweiten stärkereichen Faserfraktion zu Stärke kann einen der folgenden Schritte - insbesondere in folgender Reihenfolge - umfassen:
- D.1: Stärkewaschen;
- D.2: Stärkeentwässerung; und/oder
- D.3: Trocknung.

Dabei ist es besonders von Vorteil, wenn die beiden stärkereichen Faserfraktionen vor der Weiterverarbeitung vereint werden, um den Arbeitsaufwand zu minimieren.

Der Gegenstand der Erfindung wird nachfolgend anhand von Zeichnungen näher beschrieben. Sie zeigen:
- Figur 1: einen Ausschnitt eines Verfahrensdiagramms;
- Figur 2: ein Verfahrensdiagramm eines bereits bekannten Verfahrens zur Gewinnung von Stärke auf stärkereichen Pflanzen;
- Figur 3,4: Diagramme zu einem Versuch.

In Figur 2 ist ein Diagramm dargestellt, welches ein bekanntes Verfahren zur Gewinnung von Stärke 11 a beschreibt. Dabei wird nachfolgend die Stärkegewinnung aus Kartoffelknollen näher beschrieben. Das Verfahren ist allerdings nicht auf Kartoffeln beschränkt, sondern lässt sich auch auf die Stärkegewinnung aus anderen stärkehaltigen Pflanzen, insbesondere auf Cassavawurzeln und auf Leguminosen (Erbsen oder Bohnen, Gewinnung von Erbsen- oder Bohnenstärke) anwenden.

Ausgehend von einer Menge an geernteten Kartoffeln bzw. Cassavawurzeln 1 erfolgt zunächst ein Entsteinen und Waschen 2 in einer Wasch- und Entsteinungsanlage, beispielsweise in einer Trommelwaschmaschine.

Daran schließt sich die Zerkleinerung der Kartoffeln bzw. Cassavawurzeln an. Dies kann durch Desintegrieren 3 erfolgen, mittels eines Zerkleinerers oder einer Reibe, insbesondere einer Ultrareibe. Je nach Menge an zu verarbeitenden Kartoffeln bzw. Cassavawurzeln können Ultrareiben der Anmelderin mit der Bezeichnung HRD, beispielsweise HRD 300, 400, 500 oder 600 eingesetzt werden. Während des Reibens wird die Mehrzahl an Zellen durch die mechanische Bearbeitung geöffnet und die Stärke ins Wasser freigesetzt. Während des Reibens 3 wird somit Stärkemilch gebildet und Pflanzenfasern.

Bei einem Verreiben von Cassavawurzeln wird in der Regel Prozesswasser zugegeben.

Auf diese Weise können derzeit durch die Ultrareiben der Anmelderin 95-97 Gew. % des Gesamtgehalts an Stärke in einer Kartoffelknolle gewonnen werden. 3-5 Gew.% an Stärke verbleibt entsprechend in den Pflanzenfasern.

Nach dem Reiben der Kartoffeln bzw. Cassavawurzeln kann ein optionales Entsanden 4 stattfinden.

Anschließend werden - ggf. nach einem zentrifugalen Abtrennen von Fruchtwasser vorzugsweise in einem Dekanter 16 - die Pflanzenfasern durch Trennen, insbesondere Sieben, 5 von der Stärkemilch getrennt. Dies entspricht einer Trennung der zerkleinerten Pflanzen in eine erste stärkereiche Faserfraktion und eine stärkearme Faserfraktion, wobei die stärkereiche Faserfraktion in diesem Fall die Stärkemilch und die stärkearme Faserfraktion die Pflanzenfasern sind.

Darauf folgt ein Entwässern 12 der Pflanzenfasern, welche im Anschluss als Faserpülpe 13 aus dem Prozess abgeführt werden.

Die Stärkemilch wird dagegen nach dem Schritt 5 zu Stärke weiterverarbeitet. Dies erfolgt zunächst durch Stärkewaschen 6, wobei die Stärkemilch weiter gereinigt wird. Hierfür wird zusätzlich Waschwasser 7 zugeleitet. Aus dem Waschwasser wird nach dem Waschen der Stärkemilch Stärke in einer Stärkerückgewinnung 8 zurückgewonnen, welche in die ungewaschene Stärkemilch vor dem Stärkewaschen 6 rückgeführt wird. Das Waschwasser wird anschließend als Brauchwasser 9 aus dem Prozess entfernt.

Die Stärkefraktion der Stärkerückgewinnung 8 kann allerdings auch noch fein verteilte Fasern enthalten. Diese Fraktion wird durch eine Feinfasersiebung entfernt.

Die gewaschene Stärkemilch wird im Anschluss in einer Stärkeentwässerung 10 vom überwiegenden Teil an Wasser befreit. Das bei diesem Vorgang abgeführte Wasser wird dem Waschwasser 7 des Stärkewaschvorgangs 6 zugeführt.

Die entwässerte Stärke wird schließlich in einer Trocknung 11 von Restwasser entfernt und ggf. verpackt.

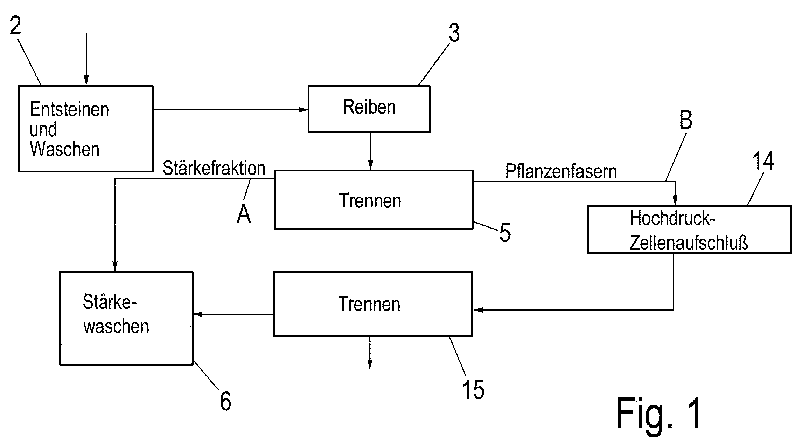

In ein solches Verfahren lässt sich die in Figur 1 abgebildete erfindungsgemäße Modifikation des Verfahrens integrieren.

Ausgehend von der Ausgangsmenge an Kartoffeln bzw. Cassavawurzeln erfolgt, analog zum Verfahren in Figur 1, ein Entsteinen und Waschen 2, sowie ein sich daran anschließendes Zerkleinern, vorzugsweise durch Reiben 3.

Im Anschluss an das Reiben kann nach wie vor auch eine optionale Entsandung 4 erfolgen.

Vorzugsweise erfolgt auch wieder bei 16 eine Fruchtwasserabscheidung, insbesondere beim Verarbeiten von Kartoffeln.

Danach erfolgt eine Trennung, insbesondere durch Sieben, 5, bei welchem die geriebenen Kartoffeln bzw. Cassavawurzeln in eine erste stärkereichen Faserfraktion aus Stärkemilch A und eine erste stärkearme Faserfraktion aus Pflanzenfasern B aufgetrennt werden.

Diese erste stärkearme Faserfraktion aus Pflanzenfasern B wird anschließend einem Hochdruckzellaufschluss 14 unterzogen. Dabei werden die Pflanzenfasern einem Hochdruckzellaufschlusszugeführt.

Es hat sich gezeigt, dass durch diesen zusätzlichen Behandlungsschritt der Großteil der in den Pflanzenfasern verbleibenden Stärke abgetrennt werden kann. Dadurch kann die Ausbeute um zusätzliche 2-4 Gew.% des Gesamtgehalts an Stärke in einer Kartoffelknolle bzw. Cassavawurzeln gesteigert werden, so dass Stärke zu 99 Gew.% aus der Kartoffelknolle gewonnen werden kann.

Die zusätzlich durch den Hochdruck-Zellaufschluss 14 gewonnene Stärke kann getrennt von der bereits im Siebvorgang abgetrennten ersten stärkereichen Faserfraktion aus Stärkemilch A weiterverarbeitet werden.
Es ist allerdings besonders vorteilhaft, wenn die beim Hochdruckzellaufschluss 14 gewonnene Stärke der beim Trennen, insbesondere Sieben, 5 gebildeten Stärkemilch zugeführt wird, so dass keine zusätzlichen Energiekosten durch die getrennte Bearbeitung der zusätzlich gewonnenen Stärke entstehen.

Hierfür kann die Stärke durch - hier nicht näher dargestelltes - Trennen, insbesondere Sieben, zunächst als zweite stärkereiche Faserfraktion von der zweiten stärkearmen Faserfraktion aus Pflanzenfasern getrennt werden.

Vor dem Zuführen der zweiten stärkereichen Faserfraktion zur ersten stärkereichen Faserfraktion aus Stärkemilch A kann ein zweites Trennen, insbesondere Sieben, 15 der zweiten stärkereichen Faserfraktion erfolgen.

Optional können auch die erste stärkereiche Faserfraktion aus Stärkemilch A und die zweite stärkereiche Faserfraktion bereits vor oder während des zweiten Trennens, insbesondere Siebens, vereinigt werden, so dass auch die erste Fraktion aus Stärkemilch dem zweiten Trennen, insbesondere Siebenunterzogen wird. Auf diese Weise kann auch eine verbesserte Reinheit der ersten Fraktion aus Stärkemilch A erreicht werden, wodurch die nachfolgende Stufe des Stärkewaschens 6 mit geringerem Aufwand, insbesondere mit einer geringeren Menge an Waschwasser 7 betrieben werden kann.

An die Stufe des Stärkewaschens 7 schließen sich vorzugsweise die anderen Prozess-Stufen der Weiterverarbeitung an, wie sie in Figur 1 abgebildet sind.

Durch den zusätzlichen Schritt des Hochdruck-Zellaufschlusses 14 können auch die an sich bekannten Verfahrensschritte aus Figur 1 in vorteilhafter Weise weiter optimiert und modifiziert werden. Dies wird im Folgenden näher beschrieben.

Nach dem Reiben 3 können die geriebenen Kartoffeln bzw. Cassavawurzeln bzw. kann die Kartoffelpülpe bzw. Cassavapülpe in eine Grobfraktion und eine Feinfraktion durch Trennen, insbesondere Sieben 5 aufgeteilt werden. Dabei kann die Trennung durch Trennen, insbesondere Siebenmittels eines stationären Siebes, beispielsweise durch ein Siebband (sieve bend) oder ein rotierendes Sieb erfolgen. Das Trennen, insbesondere Sieben, 5 dient insbesondere dazu, wie bereits zuvor beschrieben, die Fasern von der Stärke bzw. Stärkemilch zu separieren.

Denkbar ist es auch, dass durch das Trennen, insbesondere Sieben, 5 ein Abtrennen einer stärkearmen ersten Fraktion aus gröberen Fasern aus einer stärkereichen ersten Fraktion aus feineren Fasern und Stärke erfolgt. Der Vorteil dieser Vorgehensweise gegenüber dem vorgenannten vollständigen Trennen von Stärke und Fasern ist, dass nur die wesentlich kleinere Fraktion an gröberen Fasern dem anschließende Hochdruck-Zellaufschluß 14 unterzogen wird, wodurch es möglich wird, eine relativ kleinere, den Hochdruck erzeugende Einrichtung einzusetzen.

Beim Hochdruckzellaufschluss 14 wird somit entweder die vollständige Faserfraktion oder die Fraktion aus gröberen Fasern dem Homogenisator zugeführt.

Innehalb der Hochdruck erzeugenden Einrichtung, insbesondere des Homogenisators, wird das Fasermaterial vorzugsweise einem kleinen Spalt bei einem Druck von vorzugsweise wenigstens 20, insbesondere wenigstens 50 bis 150, vorzugsweise bis 150 bar zugeführt. Durch die hohen Scherkräfte wird unter Hochdruck ein Zellaufschluss erreicht und es wird Stärke aus den Fasern freigesetzt.

Anschließend wird die aufgeschlossene Stärke nach dem Hochdruckzellaufschluss durch Trennen, insbesondere Sieben, von der Pülpefraktion getrennt und vereinigt sich im Gegenstrom mit der restlichen Stärkemilch

Nachfolgend sei ein Versuch erläutert.

Fasermaterial aus einer europäischen Kartoffelstärkefabrik nach der 4. Stufe einer mehrstufigen Zentrifugalsiebextraktion (Schritte A und B) wurde als stärkearme Fraktion weiterverarbeitet, um die Effizienz der Schritte C und D zu prüfen.

Es wurde eine Probe von 1000 kg verwendet, die um 5% Fasermaterial enthielt (auf der Basis der Trockenmasse (dry solids).

Die Probe wurde mit (Trink-)Wasser (tap water) zu 2% Trockenmassegehaltkonzentration verdünnt, was ggf. vor dem Homogenisieren vorteilhaft ist.

Die Stärkekonzentration in den Fasern betrug ca. 22% (Trockenstärkegehalt der gesamten Trockenmasse) und lag im Wesentlichen als gebundene Stärke vor 17% und 5% freie Stärke).

Das verdünnte Fasermaterial wurde in einen Hochdruck-Homogenisator gepumpt. (GEA Niro Soavi type S3006 H-a). Der Druck im Homogenisator wurde zwischen 50 and 150 bar verändert. Der Ausgang/Auslass des Homogenisators wurde in einen Behälter geleitet. Das homogenisierte Material wurde sodann aus dem Container durch einem Schwingungssieb gepumpt (Sweco Typ L 524), um durch Sieben die groben Fasern aus der Stärke abzutrennen.

Es wurden Proben genommen, die mit dem Mikroskop untersucht wurden. Der Stärkegehalt wurde ferner mit dem Verfahren ICCI168 (Verfahren unter Verwendung enzymatischer Degradation) untersucht.

Die mikroskopische Untersuchung zeigte, dass der überwiegende Anteil an Stärke aus der Faserpülpe gelöst wurde. Es zeigte sich auch, dass die Fasern eine signifikante Größe von mehr als 200 µm behielten.

Die Ergebnisse werden in der nachfolgenden Tabelle dargestellt: Ergebnis: Mit dem beschrieben Verfahren kann insbesondere durch Anwendung eines Homogenisators der überwiegende Anteil der Stärkekörner in den Fasern freigesetzt und abgetrennt werden.

Es wurde auch beobachtet, dass die Qualität der bei der Stärkegewinnung zurückbleibenden Fasern sehr gut ist und dass sie als Faserzusatz für Nahrung, insbesondere Nahrung mit relativ niedrigem Kohlenhydratanteil ("Low Carb" genannt) nutzbar sind. Die Eignung der stärkereduzierten Fasern zur Wasseraufnahme ist sehr gut.

| **Homogenisatordruck (bar)** | **Stärkegehalt (Trockenstärke zu Trockenfasern)** | |
|---|---|---|
| | **Gebunden** | **Frei** |
| 0 | 17% | 6% |
| 50 | 10% | 12% |
| 100 | 10% | 13% |
| 150 | 8% | 14% |

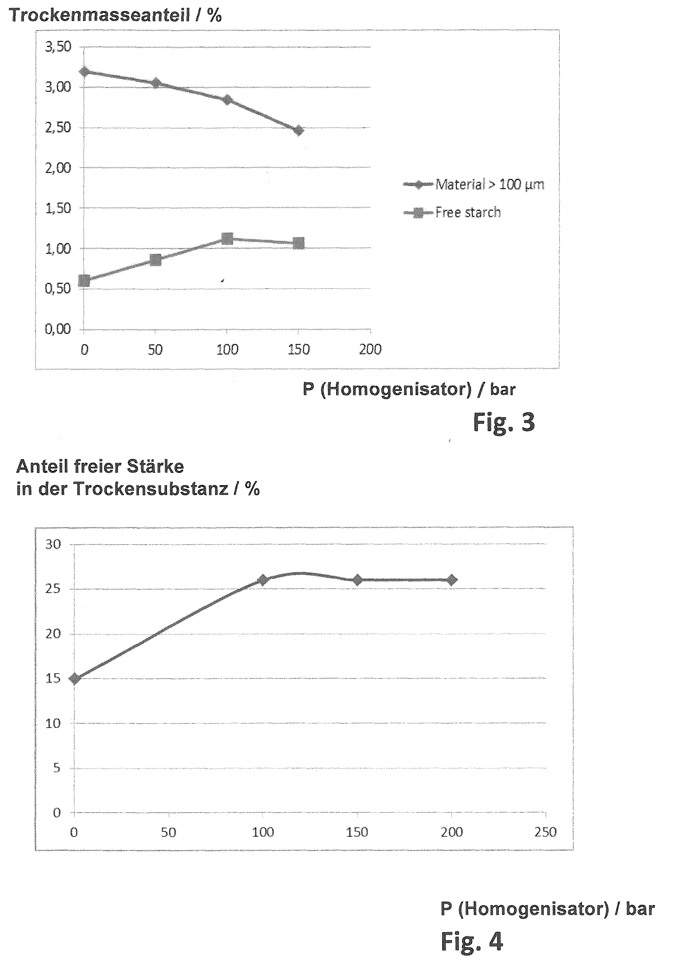

Abschließend sei unter Bezug auf Fig. 3 und 4 ein weiterer Versuch erläutert.

Bei diesem Versuch wurde Fasermaterial aus einer polnischen Kartoffelstärkefabrik nach der 3. Stufe einer mehrstufigen Zentrifugalsiebextraktion (Schritte A und B) entnommen und wurde als stärkearme Fraktion weiterverarbeitet, um die Effizienz der Schritte C und D zu prüfen.

Das mit Wasser gemischte und verdünnte Fasermaterial wurde zunächst in einen Hochdruckhomogenisator gepumpt. (GEA Niro Soavi). Der Druck im Homogenisator wurde im Versuch auf Werte zwischen 50 and 250 bar eingestellt (Fig. 3, 4).

Die von Fasern befreite wässrige Stärke-Pülpe (eine Probe von 20 g) wurde anschließend mit 10 l Wasser verdünnt und in eine Labor-zentrifuge (rpm: 1000) gegeben, um im Zentrifugalfeld die Stärke abzutrennen, um den Anteil freier Stärke bestimmen zu können. Der Stärkegehalt wurde mit dem Evans-Verfahren bestimmt (Fig. 3, untere Linie "free starch").

Material am Ausgang/Auslass des Homogenisators (100 g) wurde zudem mit 15 l Wasser verdünnt und durch ein Sieb gepumpt (100 µm-Sieb), um die Fasern abzutrennen. Das Material auf dem Sieb wurde gesammelt und 24 h in einem Ofen getrocknet. Derart kann das Gewicht der Trockenmasse mit einer Größe von mehr als 100 µm je 100 g bestimmt werden (Fig. 3, obere Linie "Material > 100 µm).

Begleitend wurden vor und nach dem Homogenisator Proben genommen, die mit dem Mikroskop untersucht wurden.
Bis zu einem Druck von 100 bar steigt der Anteil freier Stärke nahezu linear mit dem Druck an. Mit weiter zunehmendem Druck steigt der Anteil freisetzbarer Stärke in der Regel nicht mehr nennenswert weiter an.

Die begleitende mikroskopische Untersuchung zeigte, dass der überwiegende Anteil an Stärke aus der Faserpülpe gelöst wurde, besonders vorteilhaft bei 100 bar Druck im Homogenisator. Es zeigte sich, dass die Fasern ihre Größe im Wesentlichen bis 100 bar behielten und dass sich die Größe der Fasern bei noch höheren Drücken etwas verringerte. Der Anteil freisetzbarer Stärke in den Fasern betrug max. 26% (Fig. 4).

Auch dieser Versuch zeigt, dass mit dem beschrieben Verfahren durch Hochdruck, insbesondere durch Anwendung eines Homogenisators, der überwiegende Anteil der Stärkekörner in den Fasern freigesetzt und abgetrennt werden In der Stärkefabrik kann derart die Ausbeute und der Anteil an gewinnbarer Stärke aus den zu verarbeitenden Pflanzen erhöht werden.

### Bezugszeichen

- 1: Kartoffeln
- 2: Entsteinen und Waschen
- 3: Reiben
- 4: Entsanden
- 4a: Sand
- 5: Trennen, insbesondere Sieben
- 6: Stärkewaschen
- 7: Waschwasser
- 8: Stärkerückgewinnung
- 8a: Sieben
- 9: Brauchwasser
- 10: Stärkeentwässerung
- 11: Trocknung
- 11a: Stärke
- 12: Entwässern
- 13: Faserpülpe
- 14: Hochdruck-Zellaufschluß
- 15: Trennen, insbesondere Sieben
- 16: Dekanter
- A: Stärkemilch
- B: Pflanzenfasern

## Patentansprüche

1. Verfahren zur Gewinnung von Stärke (11 a) aus stärkehaltigen Pflanzen, insbesondere aus Kartoffelknollen oder Cassavawurzel(n) oder Leguminosen, **gekennzeichnet durch** folgende Schritte:
A) Aufschließen, insbesondere **durch** Zerkleinern, der stärkehaltigen Pflanzen und Freisetzen von Stärke;
B) Trennen der zerkleinerten Pflanzen in eine erste stärkereiche Fraktion (1) und eine relativ dazu stärkearme Faserfraktion (2);
C) Hochdruckbehandeln der stärkearmen Faserfraktion (2) zum Hochdruck-Zellaufschließen unter einem Freisetzen weiterer Stärke;
D) Trennen der **durch** Hochdruck behandelten stärkearmen Faserfraktion in eine zweite stärkereiche Faserfraktion und eine zweite stärkearme Faserfraktion.

2. Verfahren nach Anspruch 1, **dadurch gekennzeichnet, dass** vor der Zerkleinerung der stärkehaltigen Pflanzen unter Freisetzung von Stärke ein Waschen und Entsteinen (2) der Pflanzen erfolgt.

3. Verfahren nach Anspruch 1 oder 2, **dadurch gekennzeichnet, dass** die Zerkleinerung der stärkehaltigen Pflanzen durch Reiben (3) erfolgt.

4. Verfahren nach einem der vorhergehenden Ansprüche, **dadurch gekennzeichnet, dass** die Trennung der zerkleinerten Pflanzen in Schritt A und/oder ersten stärkearmen Faserfraktion in Schritt D durch Trennen, insbesondere Sieben, (5) erfolgt.

5. Verfahren nach einem der vorhergehenden Ansprüche, **dadurch gekennzeichnet, dass** das Hochdruck-Zeilaufschüeßen bei einem Druck von mindestens 10bar, insbesondere wenigstens 20 bar, besonders vorzugsweise mindestens 50 bar, erfolgt.

6. Verfahren nach einem der vorhergehenden Ansprüche, **dadurch gekennzeichnet, dass** das Hochdruck-Zellaufschließen (14) bei einem Druck von maximal 150 bar, insbesondere maximal 250 bar, erfolgt.

7. Verfahren nach einem der vorhergehenden Ansprüche, **dadurch gekennzeichnet, dass** die erste stärkereiche Faserfraktion aus Stärkemilch (A) besteht.

8. Verfahren nach einem der vorhergehenden Ansprüche, **dadurch gekennzeichnet, dass** die erste stärkereiche Faserfraktion aus Stärkemilch (A) und feinen Fasern besteht.

9. Verfahren nach einem der vorhergehenden Ansprüche, **dadurch gekennzeichnet, dass** die Trennung der zerkleinerten Pflanzen in Schritt A und/oder ersten stärkearmen Faserfraktion in Schritt D durch mehrfaches Trennen, insbesondere Sieben, (5, 15) erfolgt.

10. Verfahren nach einem der vorhergehenden Ansprüche, **dadurch gekennzeichnet, dass** die Weiterverarbeitung der ersten und/oder zweiten stärkereichen Faserfraktion zu Stärke einen oder mehrere der folgenden Schritte in folgender Reihenfolge umfasst:
D.1 Stärkewaschen (6);
D.2 Stärkeentwässerung (10); und/oder
D.3 Trocknung (11).

11. Verfahren nach Anspruch 10, **dadurch gekennzeichnet, dass** beim Stärkewaschen (6) Waschwasser (7) eingesetzt wird, wobei das Waschwasser (7) im Anschluss einer Stärkerückgewinnung (8) unterzogen wird.

12. Verfahren nach Anspruch 10 oder 11, **dadurch gekennzeichnet, dass** Stärke, welche aus dem Waschwasser (7) rückgewonnen wurde, einem Sieben (8a) auf Pflanzenfasern unterzogen wird

13. Verfahren nach einem der vorhergehenden Ansprüche, **dadurch gekennzeichnet, dass** die Stärkeausbeute des Verfahrens mindestens 98 Gew.%, vorzugsweise 99 Gew.%, des Gesamtgehalts an Stärke in einer Kartoffelknolle beträgt.

## Claims

1. A method for recovering starch (11a) from starchy plants, in particular from potato tubers or cassava root(s) or legumes, **characterized by** the following steps:
A) disruption, in particular by comminution, of the starchy plants with release of starch;
B) separation of the comminuted plants into a first starch-rich fraction (1) and, a relatively thereto, low-starch fiber fraction (2);
C) high-pressure treatment of the low-starch fiber fraction (2) for the high-pressure cell disruption with release of further starch;
D) separation of the low-starch fiber fraction treated by high pressure into a second starch-rich fiber fraction and a second low-starch fiber fraction.

2. The method as claimed in claim 1, **characterized in that**, before the comminution of the starchy plants with release of starch, the plants are washed and destoned (2).

3. The method as claimed in claim 1 or 2, **characterized in that** the comminution of the starchy plants is performed by grating (3).

4. The method as claimed in any one of the preceding claims, **characterized in that** the separation of the comminuted plants in step A and/or of the first low-starch fiber fraction in step D is performed by separation, in particular sieving (5).

5. The method as claimed in any one of the preceding claims, **characterized in that** the high-pressure cell disruption is performed at a pressure of at least 10 bar, in particular at least 20 bar, particularly preferably at least 50 bar.

6. The method as claimed in any one of the preceding claims, **characterized in that** the high-pressure cell disruption (14) is performed at a pressure of a maximum of 150 bar, in particular a maximum of 250 bar.

7. The method as claimed in any one of the preceding claims, **characterized in that** the first starch-rich fiber fraction consists of starch milk (A).

8. The method as claimed in any one of the preceding claims, **characterized in that** the first starch-rich fiber fraction consists of starch milk (A) and fine fibers.

9. The method as claimed in any one of the preceding claims, **characterized in that** the separation of the comminuted plant in step A and/or of the first low-starch fiber fraction in step D is performed by multiple separation, in particular sieving (5, 15).

10. The method as claimed in any one of the preceding claims, **characterized in that** the further processing of the first and/or second starch-rich fiber fraction to starch comprises one or more of the following steps in the following sequence:
D.1 starch washing (6);
D.2 starch dewatering (10); and/or
D.3 drying (11).

11. The method as claimed in claim 10, **characterized in that**, in the starch washing (6), washing water (7) is used, wherein the washing water (7) is then subjected to a starch recovery (8).

12. The method as claimed in claim 10 or 11, **characterized in that** starch which has been recovered from the washing water (7) is subjected to a sieving (8a) on plant fibers.

13. The method as claimed in any one of the preceding claims, **characterized in that** the starch yield of the method is at least 98% by weight, preferably 99% by weight, of the total content of starch in a potato tuber.

## Revendications

1. Procédé pour extraire de l'amidon (11a) de végétaux contenant de l'amidon, en particulier de tubercules de pomme de terre ou de racine(s) de manioc ou de légumineuses, **caractérisé en ce qu'**il comprend les étapes suivantes :
A) ouverture des cellules des végétaux contenant de l'amidon, en particulier par broyage, et libération de l'amidon ;
B) séparation des végétaux broyés en une première fraction de fibres riche en amidon (1) et une fraction de fibres (2) plus pauvre en amidon ;
C) traitement sous haute pression de la fraction de fibres (2) pauvre en amidon pour l'ouverture des cellules sous haute pression en libérant encore de l'amidon ;
D) séparation de la fraction de fibres pauvre en amidon traitée en une deuxième fraction de fibres riche en amidon et une deuxième fraction de fibres pauvre en amidon.

2. Procédé selon la revendication 1, **caractérisé en ce qu'**avant le broyage des végétaux contenant de l'amidon en libérant l'amidon, les végétaux sont lavés et épierrés (2).

3. Procédé selon la revendication 1 ou 2, **caractérisé en ce que** le broyage des végétaux contenant de l'amidon est réalisé par râpage (3).

4. Procédé selon l'une des revendications précédentes, **caractérisé en ce que** la séparation des végétaux broyés dans l'étape A et/ou de la première fraction de fibres pauvre en amidon dans l'étape D est réalisée par séparation, en particulier par tamisage (5).

5. Procédé selon l'une des revendications précédentes, **caractérisé en ce que** l'ouverture des cellules sous haute pression est effectuée à une pression d'au moins 10 bars, en particulier d'au moins 20 bars et de préférence d'au moins 50 bars.

6. Procédé selon l'une des revendications précédentes, **caractérisé en ce que** l'ouverture des cellules sous haute pression (14) est réalisée sous une pression de 150 bars au maximum, en particulier de 250 bars au maximum.

7. Procédé selon l'une des revendications précédentes, **caractérisé en ce que** la première fraction de fibres riche en amidon se compose de lait d'amidon (A).

8. Procédé selon l'une des revendications précédentes, **caractérisé en ce que** la première fraction de fibres riche en amidon se compose de lait d'amidon (A) et de fibres fines.

9. Procédé selon l'une des revendications précédentes, **caractérisé en ce que** la séparation des végétaux broyés dans l'étape A et/ou de la première fraction de fibres pauvre en amidon dans l'étape D est réalisée par plusieurs opérations de séparation, en particulier par tamisage (5, 15).

10. Procédé selon l'une des revendications précédentes, **caractérisé en ce que** la suite du traitement de la première fraction de fibres riche en amidon et/ou de la deuxième pour obtenir l'amidon comprend les étapes suivantes, dans l'ordre suivant :
D.1 lavage de l'amidon (6) ;
D.2 déshydratation de l'amidon (10) ; et/ou
D.3 séchage (11).

11. Procédé selon la revendication 10, **caractérisé en ce que** de l'eau de lavage (7) est utilisée pour le lavage de l'amidon (6), laquelle eau de lavage (7) est ensuite soumise à une récupération de l'amidon (8).

12. Procédé selon la revendication 10 ou 11, **caractérisé en ce que** l'amidon récupéré dans l'eau de lavage (7) est tamisé (8a) afin de trier les fibres végétales.

13. Procédé selon l'une des revendications précédentes, **caractérisé en ce que** le rendement d'amidon du procédé est d'au moins 98 % du poids, de préférence de 99 % du poids de la teneur totale en amidon d'un tubercule de pomme de terre.
